# EUROPÄISCHE PATENTSCHRIFT

(11) **EP 0 767 357 B1**
(45) Veröffentlichungstag und Bekanntmachung des Hinweises auf die Patenterteilung: **29.05.2002**
(21) Anmeldenummer: 96115612.2
(22) Anmeldetag: 28.09.1996
(51) Int. Cl.: G01B 11/24

(54) **Messvorrichtung zur kontaktlosen Messanalyse von Körpern oder Oberflächen**
Measuring device for contactless object or surface analysis
Dispositif de mesure pour analyser sans contact des objets et des surfaces

(30) Priorität: 04.10.1995 DE 29515738 U
(43) Veröffentlichungstag der Anmeldung: 09.04.1997
(73) Patentinhaber: Perceptron GmbH, 81829 München (DE)
(72) Erfinder: Vosseler, Hans-Günter, 74613 Öhringen (DE)
(74) Vertreter: Clemens, Gerhard, Dr.-Ing.

(56) Entgegenhaltungen:
- EP-A- 0 617 254
- EP-A- 0 660 079
- WO-A-90/12720
- WO-A-95/17644
- FR-A- 2 696 542
- AT & T TECHNICAL JOURNAL, SHORT HILLS, NJ, US, Bd. 65, Nr. 4, Juli 1986, Seiten 58-65, XP000002006 BRUNELLE N R ET AL: "LINE SCAN VISION SYSTEM"

## Beschreibung

### TECHNISCHES GEBIET

Die vorliegende Erfindung betrifft eine Meßvorrichtung zur kontaktlosen Meßanalyse von Körpern oder Oberflächen mit einer Projektoreinheit, die den Körper bzw. die Oberfläche in einer vorgebbaren Beleuchtungsstruktur beleuchtet, einer Sensor-/Kameraeinheit, die die beleuchteten Körper oder die beleuchtete Oberfläche erfaßt, und eine Analog/Digitalwandlereinheit, die die analogen Signale der Kameraeinheit in Digitalsignale umwandelt, einer mit der Kameraeinheit in Kommunikationsverbindung stehenden zentralen Auswerteinrichtung, eine Kommunikationseinheit zum Übermitteln der Meßwerte an die zentrale Auswerteinrichtung.

Die Sicherung, Optimierung und Dokumentation der Qualität erzeugter Produkte setzt trotz des hohen Automatisierungsgrades der industriellen Fertigung eine fortlaufende und vollständige Kontrolle des Fertigungsprozesses voraus. Um einen durchgängigen Automatisierungsgrad in der Qualitätsprüfung zu erreichen, wird angestrebt, den Prüfling (Körper, Oberfläche) dreidimensional zu erfassen und auszuwerten. Hierzu werden Meßvorrichtungen der eingangs genannten Art eingesetzt, die häufig unter rauhen Industriebedingungen dreidimensionale Bildaufnahme erzeugen und zu Analysezwecken auswerten.

### STAND DER TECHNIK

Es sind Meßvorrichtungen der eingangs genannten Art bekannt, bei denen die Projektoreinheit mit Laserlicht arbeitet. Mittels einer Matrix-Elementkamera in CCD-Technik (CCD = Charge Coupled Device) werden die Bilddaten aufgenommen und einer zentralen Meßpunkterfassungseinrichtung über Verbindungskabel zugeführt. Durch den Einsatz von Laserlicht sind zusätzliche Schutzvorkehrungen erforderlich, um den Menschen vor Schädigungen oder Verletzungen zu schützen. Darüberhinaus neigt das Laserlicht insbesondere bei ölig verschmutzten oder hochglänzenden Oberflächen zum "Spekeln", d.h. es liegt eine gewisse Unschärfe vor, die eine zuverlässige Messung verhindert. Durch die bekannte zentrale Meßpunkterfassung ist ein hoher Verkabelungsaufwand erforderlich. Die mitunter relativ langen Kabelwege sind unterschiedlichsten Störeinflüssen ausgesetzt. So können beispielsweise beim Schweißen entstehende elektromagnetische Felder die Datenübertragung der Videosignale an die zentrale Meßpunkterfassung stark beeinflussen. Infolge der festen Fokussierung der Projektoreinheit ist ein einfacher Austausch bzw. ein flexibler Einsatz nicht möglich oder nur mit hohem Aufwand realisierbar. Eine Änderung von bestehenden Anlagen ist nur mit hohem Aufwand durchführbar, da für jede neue Kameraeinheit ein erhöhter Hardware-Aufwand betrieben werden muß. Insgesamt ist der Einsatz der bekannten Meßvorrichtungen sehr kostenintensiv.

In der Veröffentlichung AT & T TECHNICAL JOURNAL, SHORT HILLS, NJ, US, Bd. 65, Nr. 4, Juli 1986, Seiten 58-65, XP000002006 BRUNELLE N R ET AL: 'LINE SCAN VISION SYSTEM' ist ein Linien-Scan-Bildsystem beschrieben, das vornehmlich dazu eingesetzt wird, gedruckte Schaltungen zu prüfen. Dabei wird über eine Linien-Scan-Kamera die gedruckte Schaltung abgetastet, wobei der Prüftisch, auf dem die Schaltung liegt, mittels einer Synchronisation über einen Computer und der Linien-Scan-Kamera schrittweise bewegt wird. Die Kameradaten werden dem Computer zur Auswertung zugeführt.

In der europäischen Patentanmeldung EP-A-0 660 079 wird eine Meßvorrichtung zum dreidimensionalen Messen beschrieben. Dabei wird ein Mehr-Schlitz-Projektor eingesetzt, dessen Projektionsbilder auf den Prüfling aufgenommen und in einer separaten Auswerteinheit ausgewertet werden.

### DARSTELLUNG DER ERFINDUNG

Der vorliegenden Erfindung liegt die Aufgabe zugrunde, eine gegenüber dem genannten Stand der Technik verbesserte Meßvorrichtung anzugeben, die die im Stand der Technik genannten Nachteile vermeidet und einen flexiblen Aufbau, Umbau oder einfache Nachrüstung gewährleistet, einfach in der Handhabung ist, einen hohen Bedienkomfort aufweist, einen wirtschaftlichen Einsatz ermöglicht und eine exakte und zuverlässige Messung gewährleistet.

Die erfindungsgemäße Meßvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Meßvorrichtung zeichnet sich demgemäß dadurch aus, daß eine integrierte drei Dimensionen erfassende Sensoreinheit ausgebildet ist, die die Kameraeinheit, die Analog/Digitalwandlereinheit, eine erste Auswerteinheit, die die Meßsignale auswertet und die Kommunikationseinheit integriert enthält, wobei die Projektoreinheit direkt an der Sensoreinheit angeordnet ist, und mehrere Sensoreinheiten mit einer zweiten Auswerteinrichtung in Kommunikationsverbindung stehen und mehrere zweite Auswerteinrichtungen mit mehreren Sensoreinheiten parallel geschaltet sind und mit einer zentralen Auswerteinrichtung in Kommunikationsverbindung stehen.

Bevorzugt arbeitet die erfindungsgemäße Meßvorrichtung nach dem Triangulationsverfahren mit Mehrfachlinien.

Durch das Integrieren einer Auswerteinheit vor Ort direkt hinter der Kameraeinheit wird eine dezentrale Meßwerterfassung ermöglicht. Die analogen Videosignale werden in der Sensoreinheit in digitale Signale umgewandelt und ausgewertet. Die Übermittlung dieser Meßdaten an eine im Hintergrund arbeitende Auswerteinrichtung für mehrere Sensoreinheiten ist problemlos möglich, wobei Störeinflüsse bei der Übertragung der Meßdaten wesentlich geringer sind als bei den bekannten Meßvorrichtungen. Eine Verkabelung von Videoleitungen über weite Strecken entfällt vollständig.

Durch den Einsatz von zweiten Auswerteinrichtungen, insbesondere Zellenrechnern, wird eine hohe Bedienungsfreundlichkeit erreicht. Auf Meßabweichungen kann unmittelbar vor Ort reagiert werden. So können beispielsweise problemlos bis zu neunundneunzig Sensoren auf einen Zellenrechner geschaltet sein. Sind mehrere Zellenrechner mit ihren zugehörigen Sensoreinheiten vorhanden, werden diese parallel geschaltet und stehen mit einem zentralen Leitrechner in Kommunikationsverbindung, wobei auch hier bevorzugt für die Kommunikationsschnittstellen Industriestandard-Bus-Interface-Systeme eingesetzt werden.

Gemäß einer besonders bevorzugten Ausgestaltung ist die Kommunikationseinheit als industriestandardmäßige Kommunikationsanschlußeinheit, insbesondere als CAN-Bus Interface (CAN = Controller Area Network), ausgebildet. Somit liegt ein Industrie-Bus-System vor mit standardisierten Kommunikationsschnittstellen, was den Verkabelungsaufwand weiter vermindert.

Die Sensor-/Kameraeinheit, die bevorzugt als CCD-Matrix-Kameraeinheit (CCD = Charge Coupled Device) ausgebildet ist, nimmt ein Abbild des dreidimensionalen Körpers auf. Mit seinem schnellen Analog-Digitalwandler werden die analogen Signale in digitale umgewandelt und anschließend von der innerhalb der Sensoreinheit vorhandenen Auswerteinheit ausgewertet.

Gemäß einer besonders bevorzugten Ausgestaltung der erfindungsgemäßen Meßvorrichtung besitzt die Projektoreinheit eine Halogenlichtquelle. Dadurch werden die bekannten Nachteile des Laserlichts vermieden.

Eine hinsichtlich eines flexiblen Aufbaus und flexibler Umbaumöglichkeiten besonders bevorzugte Ausgestaltung der erfindungsgemäßen Meßvorrichtung zeichnet sich dadurch aus, daß die Projektoreinheit fokussierbar ausgebildet ist. Im Gegensatz zu den bekannten Laserprojektoren mit festem Arbeitsabstand wird erfindungsgemäß ein hoher Flexibilitätsgrad erreicht.

Eine vorteilhafte Ausgestaltung zeichnet sich dadurch aus, daß die Zellenrechner und/oder die Leitrechner Mittel zum Visualisieren aufweisen, so daß die Meßergebnisse in übersichtlicher und schnell erfaßbarer Art und Weise vor Ort oder zentral dargestellt werden können, um gegebenenfalls rasch in den Fertigungsprozeß korrigierend eingreifen zu können.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung einer erfindungsgemäßen Sensoreinheit beim Erfassen der Oberfläche eines Körpers,
- Fig. 2: schematische Darstellung des Aufbaus der Sensoreinheit und
- Fig. 3: schematische Darstellungen der Kommunikationsschaltung zwischen Sensoreinheit, Zellenrechnern und einem Leitrechner.

### WEGE ZUM AUSFÜHREN DER ERFINDUNG

Bei der dreidimensionalen Bildverarbeitung können unterschiedliche Verfahren eingesetzt werden. Ein einfaches Mittel zur 3-D-Flächeninspektion bietet das Lichtschnittverfahren.

Bei diesem Verfahren wird eine Lichtlinie über das Objekt geführt. Aus einer Beobachtungsposition, die einen zur Lichtlinie unterschiedlichen Blickwinkel aufweist, erkennt man durch die Deformation der Lichtlinie die Objektkrümmung. Dieser Oberflächenverlauf hat jedoch seine Gültigkeit nur exakt an der Linienposition. Durch den Vorschub des Objektes in Längsrichtung und durch mehrere Aufnahmen des Linienverlaufs kann ein Prüfling dreidimensional erfaßt werden. Auch ein Verfahren, das mit mehreren parallelen Lichtlinien arbeitet, ist denkbar.

Ein weiteres Verfahren ist das Verfahren der strukturierten Beleuchtung. Jede Linie wird Raum-Zeit-codiert und kann somit bei der Bildaufnahme eindeutig identifiziert werden. Raum-Zeit-codiert bedeutet: jede Linie wird mehrfach, zeitlich versetzt, auf das Objekt projiziert. Die Codierung erfolgt über eine Hell- bzw. Dunkelprojektion der Linien. So erhält jede Linie ihre charakteristische Hell Dunkel-Sequenz. Jede Linie muß als Hell-Dunkel-Linie erkannt werden. Dies läßt sich durch Binarisieren mit ortsvarianter Schwelle erreichen. Jedes binarisierte Bild der Sequenz wird in einer Auswerteinrichtung gespeichert. Bei einem Referenzbild mit einer ebenen Fläche entsteht so ein Grauwertverlauf entsprechend der Liniencodierung. Wird ein Körper in die Szene gestellt, ergibt sich eine Grauwertverschiebung entsprechend dem Höhenrelief des Körpers. Durch Subtraktion von Referenzbild und Objektbild ergibt sich somit ein grauwertcodiertes Tiefenbild. Durch Kalibrierung des Aufbaus kann mit Hilfe der Transformation ein normiertes Tiefenbild berechnet werden.

Es sind auch Meßverfahren denkbar, die den Meßkörper als Volumenmodell abbilden.

Das nachfolgend dargestellte Ausführungsbeispiel arbeitet nach dem Lichtschnittverfahren.

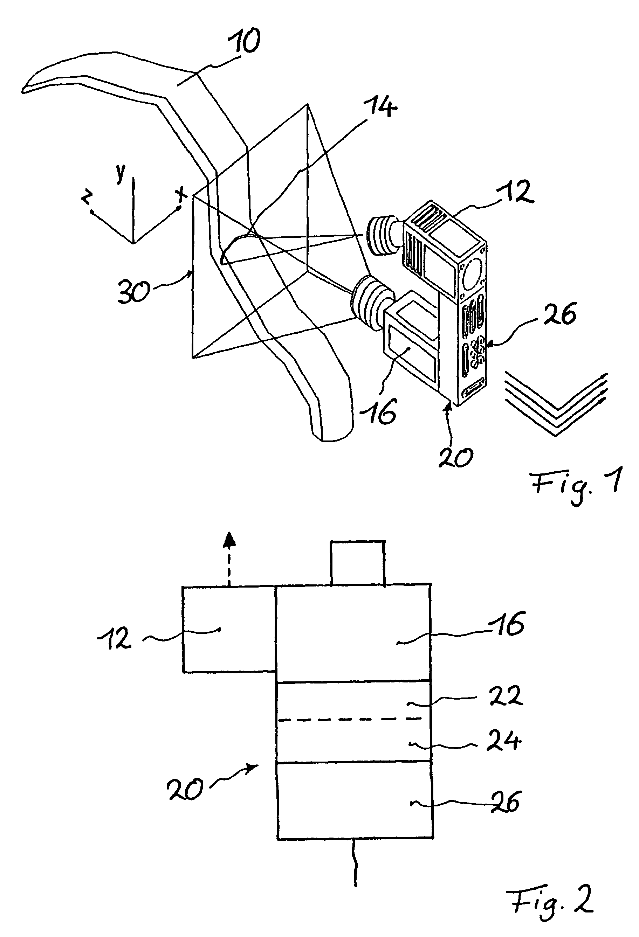

In Fig. 1 ist schematisch eine Sensoreinheit 20 dargestellt, die eine Kameraeinheit 16, eine Kommunikationsanschlußeinheit 26 und eine Projektoreinheit 12 in integrierter Bauweise enthält.

Die Projektoreinheit 12 wirft eine vorgegebene Halogenbeleuchtungsstruktur, nämlich im vorliegenden Fall eine Lichtlinie 14, auf einen Körper 10. Die Projektoreinheit 12 ist fokussierbar ausgebildet, so daß eine exakte Enstellung auf den zu beleuchtenden Prüfling (Körper 10) möglich ist.

Die Kameraeinheit 16 weist einen Erfassungsbereich 30 auf, innerhalb dessen die Lichtlinie 14 auf den Körper 10 geworfen wird. Die Kamera ist als sogenannte CCD-Matrix-Kamera ausgebildet, die den Erfassungsbereich in Form einer Matrix abbildet. Die Datenerfassung und Kalibrierung erfolgt in einem räumlich festgelegten Koordinatensystem X, Y, Z.

Gemäß Fig. 2 ist an die CCD-Kameraeinheit 16 eine Analog/Digital-Wandlereinheit 22 angeschlossen, die als sogenannter "Frame-Grabber" ausgebildet ist und die analogen Videosignale in digitale Signale umwandelt. Die digitalen Signale werden direkt in der Sensoreinheit 20 in einer integrierten Auswerteinheit 24 vorab ausgewertet und können über eine ebenfalls integriert vorhandene Kommunikationsschnittstelle, die als Can-Bus-Interface 26 ausgebildet ist, über ein Industrie-Standard-Bus-System an nachstehende Auswerteinrichtungen abgegeben und weiterverarbeitet werden.

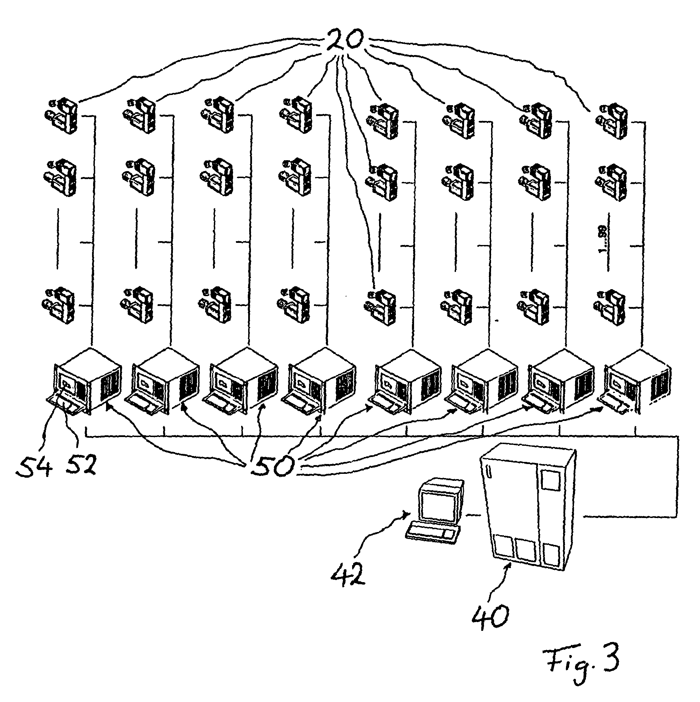

Fig. 3 zeigt schematisch den Aufbau einer Meßvorrichtung, bei dem neben einer zentralen Auswerteinrichtung 40 zweite Auswerteinheiten 50 - sogenannte Zellenrechner - eingesetzt werden. Jedem Zellenrechner 50 können mehrere Sensoreinheiten 20 zugeordnet werden. Jeder Zellenrechner 50 besitzt eine Tastatur 52 und einen Monitor 54, wobei mittels letzterem die Meßergebnisse visualisiert werden können, so daß bereits auf Zellenebene bei Feststellung von außerhalb der Toleranz liegenden Fehlern vor Ort in den Fertigungsprozeß gegebenenfalls korrigierend eingegriffen werden kann.

Die Zellenrechner 50 sind untereinander parallelgeschaltet und stehen über ein nicht näher dargestelltes Industrie-Bus-System mit der zentralen Auswerteinrichtung 40 (Leitrechner) in Verbindung. Auch in der Leitebene sind Mittel 42 zum Visualisieren der Meßergebnisse vorhanden.

Weiterhin besteht die Möglichkeit der Anbindung von übergeordneten Systemen (PPS = Produktions Planungssystem) an den Leitrechner 40, so daß eine zentrale Steuerung des Fertigungsprozesses aufgrund der ausgewerteten Meßdaten problemlos möglich ist.

## Patentansprüche

1. Meßvorrichtung zur kontaktlosen Meßanalyse von Körpern (10) oder Oberflächen mit
- einer Projektoreinheit (12), die den Körper (10) bzw. die Oberfläche in einer vorgebbaren Beleuchtungsstruktur (14) beleuchtet,
- einer Sensor-/Kameraeinheit (16), die die beleuchteten Körper (10) oder die beleuchtete Oberfläche erfaßt,
-- einer Analog/Digitalwandlereinheit (22), die die analogen Signale der Kameraeinheit (16) in Digitalsignale umwandelt,
- einer mit der Kameraeinheit (16) in Kommunikätionsverbindung stehenden zentralen Auswerteinrichtung (40) und
-- einer Kommunikationseinheit (26) zum Übermitteln der Meßwerte an die zentrale Auswerteinrichtung (40),
**dadurch gekennzeichnet, daß**
- eine integrierte, drei Dimensionen erfassende Sensoreinheit (20) ausgebildet ist, die die Kameraeinheit (16), die Analog/Digitalwandlereinheit (22), eine erste Auswerteinheit (24), die die Meßsignale auswertet und die Kommunikationseinheit (26) integriert enthält, wobei
- die Projektoreinheit (12) direkt an der Sensoreinheit (20) angeordnet ist, und
- mehrere Sensoreinheiten (20) mit einer zweiten Auswerteinrichtung (50) in Kommunikationsverbindung stehen und mehrere zweite Auswerteinrichtungen (50) mit mehreren Sensoreinheiten (20) parallel geschaltet sind und mit einer zentralen Auswerteinrichtung (40) in Kommunikationsverbindung stehen.

2. Vorrichtung nach Anspruch 1,
**dadurch gekennzeichnet, daß**
- die Kommunikationseinheit (26) als industriestandardmäßige Kommunikationsanschlußeinheit, insbesondere als CAN-Bus Interface (CAN = Controller Area Network), ausgebildet ist.

3. Vorrichtung nach einem oder mehreren der vorstehenden Ansprüche,
**dadurch gekennzeichnet, daß**
- die Kameraeinheit (16) als Matrix-Kameraeinheit, insbesondere als CCD-Einheit (CCD = Charge Coupled Device), ausgebildet ist.

4. Vorrichtung nach einem oder mehreren der vorstehenden Ansprüche,
**dadurch gekennzeichnet, daß**
- die Projektoreinheit (12) eine Halogenlichtquelle besitzt.

5. Vorrichtung nach einem oder mehreren der vorstehenden Ansprüche,
**dadurch gekennzeichnet, daß**
- die Projektoreinheit (12) fokussierbar ausgebildet ist.

6. Vorrichtung nach Anspruch 1,
**dadurch gekennzeichnet, daß**
- die zweite Auswerteinrichtung (50) und/oder die zentrale Auswerteinrichtung (40) Mittel zum Visualisieren der Meßergebnisse aufweisen.

7. Vorrichtung nach einem oder mehreren der vorstehenden Ansprüche,
**dadurch gekennzeichnet, daß**
- die Analog/Digital-Wandlereinheit (22) als Frame-Grabber mit hoher Wandlergeschwindigkeit ausgebildet ist.

## Claims

1. Measurement apparatus for non-contacting measurement analysis of bodies (10) or surfaces having
- a projector unit (12) which illuminates the body (10) or the surface with an illumination structure (14) which can be predetermined,
- a sensor/camera unit (16) which records the illuminated body (10) or the illuminated surface,
-- an analogue/digital converter unit (22), which converts the analogue signals from the camera unit (16) to digital signals,
- a central evaluation device (40) which has a communications link to the camera unit (16), and
-- a communications unit (26) for transmitting the measured values to the central evaluation device (40)
**characterized in that**
- an integrated sensor unit (20) is formed, which records three dimensions and contains the camera unit (16), the analogue/digital converter unit (22) a first evaluation unit (24) which evaluates the measurement signals and integrates the communications unit (26), with
- the projector unit (12) being arranged directly on the sensor unit (20), and
- a number of sensor units (20) having a communications link to a second evaluation device (50), and a number of second evaluation devices (50) are connected in parallel with a number of sensor units (20) and have a communications link to a central evaluations device (40).

2. Apparatus according to Claim 1,
**characterized in that**
- the communications unit (26) is in the form of an industry-standard communications access unit, in particular a CAN bus interface (CAN = Controller Area Network).

3. Apparatus according to one or more of the preceding claims,
**characterized in that**
- the camera unit (6) is in the form of a matrix camera unit in particular a CCD unit (CCD = Charge Coupled Device).

4. Apparatus according to one or more of the preceding claims,
**characterized in that**
- the projector unit (12) has a halogen light source.

5. Apparatus according to one or more of the preceding claims,
**characterized in that**
- the projector unit (12) is designed such that it can be focused.

6. Apparatus according to Claim 1,
**characterized in that**
- the second evaluation device (5) and/or the central evaluation device (40) have/has means for visualizing the measurement results.

7. Apparatus according to one or more of the preceding claims,
**characterized in that**
- the analogue/digital converter unit (22) is in the form of a frame grabber with a high converter speed.

## Revendications

1. Dispositif de mesure pour analyser sans contact des corps (10) ou des surfaces comprenant les éléments suivants :
- un projecteur (12) qui éclaire le corps (10) ou la surface dans une structure d'éclairage (14) prédéfinissable,
- une unité détecteur/appareil photo (16) qui détecte les corps (10) éclairés ou la surface éclairée,
- un convertisseur analogique-numérique (22), qui convertit les signaux analogiques de l'appareil photo (16) en signaux numériques,
- un dispositif d'analyse (40) central étant en liaison de communication avec l'appareil photo (16) et
- une unité de communication (26) pour la transmission des valeurs de mesure au dispositif d'analyse (40) central,
**caractérisé en ce que**
- il est prévu un détecteur (20) intégré et détectant trois dimensions, qui contient l'appareil photo (16), le convertisseur analogique-numérique (22), une première unité d'analyse (24), qui analyse les signaux de mesure et intègre l'unité de communication (26),
- le projecteur (12) étant disposé directement sur le détecteur (20), et
- plusieurs détecteurs (20) étant en liaison de communication avec un deuxième dispositif d'analyse (50) et plusieurs seconds dispositifs d'analyse (50) étant branchés en parallèle avec plusieurs détecteurs (20) et en liaison de communication avec un dispositif d'analyse (40) central.

2. Dispositif selon la revendication 1, **caractérisé en ce que**
- l'unité de communication (26) est conçue comme une unité de raccordement de communication conforme à la norme industrielle, en particulier comme une interface CAN-bus (CAN = contrôleur de réseau local).

3. Dispositif selon l'une quelconque ou plusieurs des revendications précédentes, **caractérisé en ce que**
- l'appareil photo (16) est conçu comme un appareil photo à matrice, en particulier comme une unité CCD (CCD = dispositif à couplage de charge).

4. Dispositif selon l'une quelconque ou plusieurs des revendications précédentes, **caractérisé en ce que**
- le projecteur (12) possède une source de lumière halogène.

5. Dispositif selon l'une quelconque ou plusieurs des revendications précédentes, **caractérisé en ce que**
- le projecteur (12) est conçu de manière focalisable,

6. Dispositif selon la revendication 1, **caractérisé en ce que**
- le second dispositif d'analyse (50) et/ou le dispositif d'analyse central (40) présente(nt) des moyens pour visualiser les résultats de mesure.

7. Dispositif selon l'une quelconque ou plusieurs des revendications précédentes, **caractérisé en ce que**
- le convertisseur analogique-numérique (22) est conçu comme un dispositif d'enregistrement d'images (Frame-Grabber) avec une vitesse de convertisseur élevée.
